Europäisches Patentamt

European Patent Office

Office européen des brevets

(11) Veröffentlichungsnummer: **0 431 504 A2**

# EUROPÄISCHE PATENTANMELDUNG

(21) Anmeldenummer: 90123042.5

(22) Anmeldetag: 01.12.90

(51) Int. Cl.5: **B32B 7/02**, B32B 27/12, B65D 81/26

(30) Priorität: 05.12.89 DE 8914313 U

(43) Veröffentlichungstag der Anmeldung:
12.06.91 Patentblatt 91/24

(84) Benannte Vertragsstaaten:
AT BE CH DE DK ES FR GB IT LI NL SE

(71) Anmelder: MEIER + NIEHAUS GmbH
Butenpass 17
W-4292 Rhede/Westf.(DE)

(72) Erfinder: Niehaus, Gottfried
Im Esch 13
W-4292 Rhede-Vardingholt(DE)
Erfinder: Meier, Josef
Am Rosengarten 18
W-4280 Borken 2(DE)

(74) Vertreter: Türk, Gille, Hrabal
Brucknerstrasse 20
W-4000 Düsseldorf 13(DE)

(54) Trockentuch für Transportbehälter.

(57) Es ist ein Trockentuch für Transportbehälter offenbart, das aus mehrlagigem Bahnmaterial (1) besteht, dessen beide Außenseiten jeweils von einer
saugfähigen Lage (2,3) gebildet sind. Zwischen den
saugfähigen Lagen (2,3) ist eine feuchtigkeitsundurchlässige Einlage (4) angeordnet. Die beiden
saugfähigen Lagen (2,3) und die undurchlässige Einlage (4) sind zu einem Verbundmaterial dauerhaft
miteinander verbunden.

FIG.1

EP 0 431 504 A2

## TROCKENTUCH FÜR TRANSPORTBEHÄLTER

Die Erfindung betrifft ein Trockentuch für Transportbehälter und insbesondere für Transportbehälter, in denen Kühlgut transportiert wird.

Transportbehälter dieser Art sind beispielsweise Container, die für Luftfrachtzwecke benutzt werden.

Gekühlte und insbesondere tiefgefrorene Transportgüter müssen auch über längere Transportzeiten auf der notwendigen Kühltemperatur gehalten werden. Deshalb ist es üblich, derartigen Gütern zum Transport Trockeneis od. dgl. beizufügen, das gewährleistet, daß das Transportgut auf der gewünschten Temperatur auch über längere Transport- und Zwischenlagerzeiten gehalten wird.

Obwohl Trockeneis besonders in geschlossenen Behältern wie Containern sehr lange die dort gewünschte Temperatur aufrechterhalten kann, wird das Trockeneis mit der Zeit verbraucht. Dabei läßt sich nicht vermeiden, daß sich Feuchtstoffe wie Wasser ansammeln, sei es durch den Verbrauch des Trockeneises oder auch durch geringes Abtauen des gefrorenen und insbesondere tiefgefrorenen Transportgutes. Um zu verhindern, daß dies so im Behälter anfallende flüssige Wasser das Transportgut ungünstig beeinflussen kann, ist es bekannt, im Bodenbereich von Containern, in denen gekühlte, gefrorene und insbesondere tiefgefrorene Güter transportiert werden, saugfähige Tücher anzuordnen, welche durch Abtauen vom Trockeneis und/oder dem Transportgut selbst anfallendes Wasser aufsaugen und binden. Dadurch kann zwar ein Großteil des anfallenden Wassers aufgesaugt und gebunden werden, jedoch läßt sich vielfach nicht vermeiden, daß trotz Einlegen von saugfähigen Trockentüchern in den Bodenbereich eines für den Kühltransport bestimmten Behälters wie Containers flüssiges Wasser stehen bleibt.

Es wurde gefunden, daß ein nicht unwesentlicher Anteil von in einem für Kühltransporte benutzten Behälter anfallenden flüssigen Wassers Kondenswasser ist, das sich an den Innenwänden des Behälters niederschlägt und an den Wänden herabläuft, d.h. also nicht direkt von dem als Kühlmittel verwendeten Trockeneis und dem Transportgut stammt, sondern auf natürliche Luftfeuchtigkeit zurückzuführen ist.

Dadurch wird der beim Transport und insbesondere beim längeren Transport anfallende Wasseranteil in einem Kühltransport-Behälter relativ hoch, so daß das insgesamt anfallende Wasser von den eingelegten Trockentüchern nur noch ungenügend aufgesaugt werden kann. Dabei wurde gefunden, daß der Kondenswasseranteil vielfach höher als der Tauwasseranteil ist.

Der Erfindung liegt die Aufgabe zugrunde, ein Trockentuch für Transportbehälter und insbesondere für den Transport von gekühlten, gefrorenen und tiefgefrorenen Gütern bestimmte Behälter zu schaffen, mit dessen Hilfe vermieden wird, daß Kondenswasser und durch Abtauen anfallendes Wasser im Behälter zusammenlaufen können.

Diese Aufgabe wird erfindungsgemäß mit einem Trockentuch gelöst, das die Merkmale des Anspruches 1 aufweist. Vorteilhafte Ausgestaltungen und Verbesserungen dieser Erfindung sind Gegenstand der Unteransprüche.

Das erfindungsgemäße mehrlagige Bahnmaterial kann als Auskleidung in einen Behälter für Kühl- oder Gefriergut eingelegt werden, wobei es im allgemeinen gleichgültig ist, welche Seite des Bahnmateriales nach außen und welche nach innen weist, da die äußeren saugfähigen Lagen oder Schichten desselben vorzugsweise gleich ausgebildet und auch gleich dick sind und somit gleiche Saugfähigkeit und Saugkapazität aufweisen. Mit diesem Trockentuch wird sowohl das an der Behälterwand anfallende Kondenswasser als auch das durch Abtauen freigesetzte Wasser wirksam aufgesaugt und gebunden, allerdings getrennt voneinander, so daß sich im Behälter kein unkontrollierbares freies Wasser ansammelt. Nach Beendigung des Transportes und dem Entleeren des Behälters wird das erfindungsgemäße Trockentuch herausgenommen und getrocknet, woraufhin es zur erneuten Verwendung wieder zur Verfügung steht.

Obwohl man mit dem erfindungsgemäßen Trockentuch einen Behälter vollständig auskleiden kann, genügt es auch, ihn nur teilweise mit diesem Trockentuch auszukleiden oder zu belegen. Unter Umständen reicht es aus, das erfindungsgemäße Trockentuch lediglich auf den Boden des Behälters zu legen, um seine gewünschte Funktion zu erfüllen. Auch in diesem Falle wird das an den Innenwänden des Behälters herablaufende Kondenswasser von der außenliegenden Schicht des Trockentuches aufgesaugt, während das direkt vom Transportgut und/oder Kühlmittel kommende Wasser von der innenliegenden Schicht gebunden wird.

Durch die Erfindung wird ein einfaches und preiswert herzustellendes Trockentuch geschaffen, das in einem Behälter für den Transport von Kühl- oder Gefriergut anfallendes Wasser wirksam so aufsaugt, daß das vom Transportgut und vom Kühlmittel abgegebene Wasser nicht mit dem an den Wänden des Behälters herablaufenden Kondenswasser vermischt wird. Auch weist dieses Trockentuch eine größere Saugkapazität als bekannte einfache bzw. einlagige Trockentücher auf.

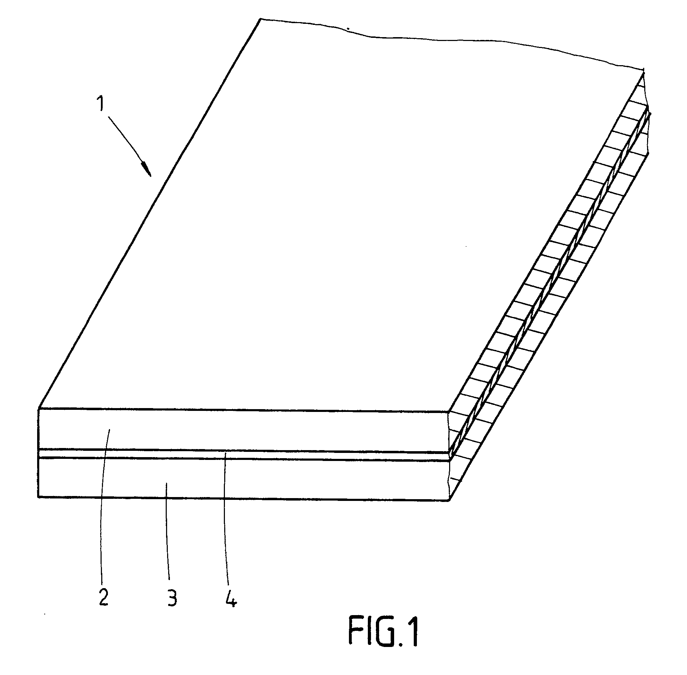

In der Zeichnung ist ein Ausführungsbeispiel eines erfindungsgemäßen Trockentuches schematisch und nicht maßstabsgetreu ausschnittsweise schaubildlich dargestellt.

Das in der Zeichnung gezeigte Trockentuch (1) kann als Stückgut oder auch als Meterware, im letztgenannten Fall aufgerollt, geliefert werden. Dieses Trockentuch (1) ist als dreilagiger Verbundkörper ausgebildet, wie die Zeichnung zeigt.

Die beiden äußeren Lagen (2 und 3) bestehen jeweils aus saugfähigem Material, nämlich beim dargestellten Ausführungsbeispiel aus Vlies-Material, das vorzugsweise aus Zellulosefasern wie Baumwollfasern hergestellt ist, d.h. also ein Papierstoff ist. Ein solches Material ist preiswert und kann eine große Saugfähigkeit und Saugkapazität aufweisen.

Die beiden saugfähigen Lagen (2 und 3) sind von einer mittleren Einlage (4) getrennt, die aus einer für Feuchtigkeit nicht durchlässigen Kunststoff-Folie besteht. Die Kunststoff-Folie (4) hält die äußeren Lagen (2 und 3) zusammen, die beispielsweise auf die Kunststoff-Folie aufgeklebt oder aufkaschiert sind. Die Einlage (4) besteht vorzugsweise aus einer Folie aus einem thermoplastischen Kunststoff. Besonders vorteilhaft ist es, wenn die Einlage (4) aus Polyethylen besteht.

Gemäß einem praktischen Ausführungsbeispiel der Erfindung hat das Trockentuch (1) ein Flächengewicht von etwa 250 g/m$^2$, wobei das Flächengewicht jeder der beiden aus Zellulose-Vlies bestehenden äußeren Lagen (2 und 3) etwa 100 g/m$^2$ und das Flächengewicht der folienartigen Einlage etwa 50 g/m$^2$ beträgt.

## Ansprüche

1. Trockentuch für Transportbehälter, **dadurch gekennzeichnet,** daß es aus mehrlagigem Bahnmaterial (1) besteht, dessen beide Außenseiten jeweils aus einer saugfähigen Lage (2, 3) bestehen, zwischen denen eine feuchtigkeitsundurchlässige Einlage (4) angeordnet ist.

2. Trockentuch nach Anspruch 1, dadurch gekennzeichnet, daß die beiden saugfähigen Lagen (2, 3) und die undurchlässige Einlage (4) zu einem Verbundmaterial dauerhaft miteinander verbunden sind.

3. Trockentuch nach Anspruch 1 oder 2, dadurch gekennzeichnet, daß die beiden saugfähigen Lagen (2, 3) aus Vlies-Material bestehen.

4. Trockentuch nach Anspruch 3, dadurch gekennzeichnet, daß die beiden saugfähigen Lagen (2, 3) aus Zellulosefaser-Vlies bestehen.

5. Trockentuch nach einem der Ansprüche 1 bis 4, dadurch gekennzeichnet, daß die undurchlässige Einlage (4) eine Kunststoff-Folie ist.

6. Trockentuch nach Anspruch 5, dadurch gekennzeichnet, daß die undurchlässige Einlage (4) eine Folie aus thermoplastischem Kunststoff ist.

7. Trockentuch nach Anspruch 6, dadurch gekennzeichnet, daß die undurchlässige Einlage (4) eine Folie aus Polyethylen ist.

FIG.1